# EUROPEAN PATENT SPECIFICATION

(11) **EP 3 945 956 B1**
(45) Date of publication and mention of the grant of the patent: **03.01.2024**
(21) Application number: 20719762.5
(22) Date of filing: 20.03.2020
(51) Int. Cl.: A47J 31/057, A47J 31/06, A47J 31/44, A47J 31/58

(54) **MACHINE AND METHOD FOR PREPARING BEVERAGES**
MASCHINE UND VERFAHREN ZUR HERSTELLUNG VON GETRÄNKEN
MACHINE ET PROCÉDÉ DE PRÉPARATION DE BOISSONS

(30) Priority: 26.03.2019 IT 201900004369
(43) Date of publication of application: 09.02.2022
(73) Proprietor: De' Longhi Appliances S.r.l. Con Unico Socio, 31100 Treviso (IT)
(72) Inventor: MAZZON, Renzo, 31100 TREVISO (IT); TREVISAN, Gianpaolo, 31100 TREVISO (IT)
(74) Representative: Petraz, Gilberto Luigi
(86) International application number: PCT/IT2020/050068
(87) International publication number: WO 2020/194357

(56) References cited:
- EP-A2- 1 939 559
- EP-A2- 3 026 404
- DE-A1-102011 075 194
- US-A- 5 094 153
- US-A1- 2006 123 994
- US-A1- 2015 201 795
- US-A1- 2017 172 340

## Description

### FIELD OF THE INVENTION

The present invention concerns an automatic or semi-automatic machine for the preparation of beverages, advantageously hot, such as coffee, tea, various infusions, or even just water, and a method for preparing beverages.

### BACKGROUND OF THE INVENTION

Machines that produce American coffee are known, that is long coffee, also called "drip coffee", obtained by infusing a quantity of coffee powder with hot water.

It is known that current machines of this type have a water tank, a device for heating the water, a container suitable to position a filtering element for the coffee powder, or other aromatic mixture, which the hot water passes through, and a receptacle, for example a carafe, normally suitable to contain a volume suitable to fil a certain number of cups or small cups.

The carafe is normally associated with its own heating means to keep the coffee beverage warm after delivery.

It is known that drip type machines are generally designed to deliver a fixed quantity of beverage, generally corresponding to the size of the tank or a predefined volume of beverage, for example one liter, or a volume of a determinate container, for example a carafe.

There has also been a recent increase in the popularity of machines for delivering "drip coffee" type beverages which offer the possibility of selecting the quantity of infused beverage to be delivered, and also the degree of infusion thereof.

The possibilities of making a selection, however, are advantageous only if the users want beverages with different organoleptic characteristics. When multiple users want the same type of beverage, in order to optimize the preparation times thereof it is in fact preferable to start a single preparation cycle providing a greater quantity of beverage.

In the event that a quantity of beverage equal to one carafe is selected it is necessary to wait several minutes, generally from 8 to 10, to complete the preparation cycle.

In order to obtain a cup of coffee without waiting for the end of the operations it is therefore necessary to remove the receptacle during the preparation cycle.

For this purpose the machines are equipped with an interception valve driven directly by the container, for example the carafe, when the container is positioned or removed from its housing, in order to open the outlet of the beverage when the container is positioned in its housing, and close the outlet when the container is removed.

In the case of machines for preparing coffee in which the use of different containers is allowed, the machines are normally provided with an interception valve, which can be manually driven to close the outlet of the beverage when the receptacle is removed; the valve has to then be opened again to allow the delivery of the remaining part of the beverage.

In other cases the valve can be servo-assisted, however the drive thereof occurs in any case following a manual intervention or command provided by the user.

In the event that the valve remains closed and is not reopened in a short time to complete the delivery, however, it can happen that an over-extraction of the aromatic substances occurs, or even that the beverage is possibly delivered with an unsuitable temperature.

Another disadvantage is that, in most known machines, water can continue to flow onto the coffee even when the interception valve is closed and, if the receptacle is not repositioned within a certain time interval, there can be leakages of coffee from the overflow holes.

Another disadvantage of the known machines is that, once a determinate quantity of beverage to be prepared has been selected, the choice of the correct receptacle to be used is left to the user. If he/she is possibly not paying attention, an incorrect receptacle could be used and leakages of the beverage could occur, which can dirty the machine and/or the user, with the consequent risk of possible burns for him/her.

Examples of known machines for preparing beverages are described in documents US-A-2017/0172340, EP-A-3026404, US-A-2006/0123994 and US-A-2015/0201795.

The Applicant has therefore set himself the purpose of expanding the functions and versatility of this type of machines, avoiding the disadvantages identified above, as well as others.

One purpose of the present invention is to provide a machine for preparing beverages which is reliable and safe for the user.

Another purpose is to deliver a quantity of beverage as requested by the user in a precise manner.

Another purpose is to eliminate possible leakages of the beverage caused by the use of unsuitable receptacles not consistent with the settings provided to the machine.

Another purpose is to deliver the infused beverage with the degree of intensity and concentration of the specific essence desired.

It is also a further purpose to facilitate and simplify the use of the machine by the user.

The Applicant has studied, tested and embodied the present invention to overcome the shortcomings of the state of the art and to obtain these and other purposes and advantages.

### SUMMARY OF THE INVENTION

The present invention is set forth and characterized in the independent claims 1 and 6. The dependent claims describe other characteristics of the present invention or variants to the main inventive idea.

In accordance with the above purposes, embodiments described here concern a machine for preparing beverages which allows a user to select the type of beverage to be prepared, for example an infused beverage with desired organoleptic characteristics, or possibly only hot water.

The machine comprises a user interface, provided with appropriate commands, by means of which a user can select the characteristics of the beverage to be delivered.

According to some embodiments, the user can select the quantity of beverage to be delivered, choosing the size of the receptacle to be used, for example a carafe, a cup, a mug, a glass, or a receptacle of a different size.

According to some embodiments, the user can select the concentration of the infused beverage, for example light, normal, or strong.

The machine comprises a water tank which can be filled on each occasion, in a periodic manner, or continuously, or possibly by means of access to a continuous source.

Possible means for indicating the volume of water can be present in the water tank, possibly associated with signaling means and/or with automated means for the controlled delivery of water into the tank.

The tank is located in fluidic communication, by means of at least one circuit, with a filtering container suitable to contain an aromatic mixture to be subjected to infusion in order to obtain the infused beverage.

According to some embodiments, the filtering container can be standard, or it can be suitable to contain on each occasion a desired quantity of aromatic mixture.

The machine comprises a pump suitable to remove water from the tank and supply it to the filtering container.

Along the water path there is also a device to heat the water in transit, for example a flow-through boiler, disposed along the conduit for the fluid, through which the water fed by the pump transits.

The machine according to the invention comprises at least one outlet for a beverage fluidically connected to the tank by means of the circuit as above.

The outlet for the beverage is associated with selective delivery devices configured to open and/or close it to allow or prevent the delivery of the beverage into a receptacle positioned in a delivery zone.

The machine according to the invention comprises a control and command unit configured to regulate the functioning of the different components, in particular of the pump and the heating device, as a function of the specific selection of the beverage made by the user through the user interface.

The machine comprises at least one recognition device configured to recognize the presence and/or the type of a receptacle disposed in the delivery zone below the outlet of the beverage, and to transmit a corresponding signal to the control and command unit.

The at least one recognition device is configured to recognize the presence of a receptacle.

The at least one recognition device is also configured at least to recognize the type of receptacle, or at least its size, shape and/or containing capacity.

The control and command unit is configured to regulate the functioning of at least one between the pump, the heating device and the selective delivery devices as a function of the signal received from the recognition device.

The recognition device comprises one or more presence detection sensors configured to emit and receive electromagnetic radiations along a determinate extension in height in the delivery zone.

According to some embodiments, the recognition device comprises a plurality of presence detection sensors disposed at different heights, each suitable to transmit and receive a respective electromagnetic radiation toward the delivery zone.

The control and command unit is configured to process the data received from each of them in order to estimate the shape and/or the size of a receptacle located in the delivery zone, and use this information to regulate the functioning of the machine.

According to some embodiments, the presence detection sensors can be disposed on a wall of a housing of the machine facing toward the delivery zone, and be configured to emit respective electromagnetic radiations in a horizontal direction.

According to some embodiments the presence detection sensors can be optical sensors, suitable to emit light beams with wavelengths in the visible field, such as for example infrared.

According to other embodiments, the presence detection sensors can be ultrasonic sensors, suitable to emit electromagnetic radiations at ultrasonic frequencies.

According to other embodiments, there can be provided other recognition devices, for example optical devices comprising acquisition devices suitable to acquire an image of the delivery zone, and the control and command unit can be configured to receive the acquired image and elaborate it to recognize the presence and the type of receptacle disposed in this zone.

According to some embodiments, the recognition device comprises a weight sensor, for example a load cell, disposed in correspondence with a support base for a receptacle, for example underneath it, or on the support base and/or integrated in it.

Embodiments described here concern a method for preparing a beverage in a machine for preparing beverages of the type described above.

The method provides to:
- receive at entry, in a control and command unit, a signal relating to the organoleptic characteristics of a beverage to be prepared selected by a user through a user interface;
- receive at entry, in the control and command unit, a signal relating to the quantity of beverage to be delivered;
- determine the operating parameters at least for a pump and a heating device to regulate the water temperature and flow rate of the machine as a function of the selected beverage;
- recognize whether a receptacle suitable to receive the beverage is positioned in a delivery zone of the machine by means of at least one recognition device;
- command the functioning of at least one between the pump, the heating device, and the selective delivery devices associated with an outlet for the beverage as a function of the recognition of the receptacle carried out by the recognition device.

The method provides to recognize whether the receptacle is suitable by emitting electromagnetic radiations for a determinate extension in height in said delivery zone by means of one or more presence detection sensors of a recognition device.

According to some embodiments the method provides to transmit and receive respective electromagnetic waves in the delivery zone by means of two or more presence detection sensors disposed in respective parallel rows in a vertical direction, and process the information received to determine both a height and also a width of the receptacle in order to estimate its volume.

According to some embodiments, the method provides to recognize the presence and type of a receptacle at the time of the selection by the user, and to deactivate at least the selective delivery devices in order to prevent the delivery of the beverage when the receptacle is not present.

According to some embodiments, when an unsuitable receptacle is recognized, the method according to the invention can provide to suspend the start of the beverage preparation cycle until the receptacle is replaced with one that has suitable sizes.

In order to determine whether the receptacle is suitable, the method provides to process the data received from the recognition device in order to estimate a size and/or a capacity of the receptacle and verify if it is consistent with the quantity of beverage selected by the user

In the event that the recognized receptacle is not suitable, the method provides to start the preparation cycle and activate the interception means to allow the delivery of only a part of the total quantity requested, or start a preparation cycle of a smaller quantity of beverage, correlated to the determined and/or estimated size of the receptacle.

According to some embodiments, the method can provide to continuously monitor, or with a high frequency, the delivery zone, so as to recognize whether the receptacle is moved away from the delivery zone during the delivery of the beverage and consequently command at least the selective delivery devices to prevent the leakage of the beverage.

If the receptacle is not present and/or is not suitable, the method can provide to generate a warning signal for the user.

### BRIEF DESCRIPTION OF THE DRAWINGS

These and other characteristics of the present invention will become apparent from the following description of some embodiments, given as a non-restrictive example, with reference to the attached drawings wherein:
- fig. 1 is a schematic view of a machine for preparing beverages according to embodiments described here;
- fig. 2 is a schematic view of a machine for preparing beverages according to other embodiments described here.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

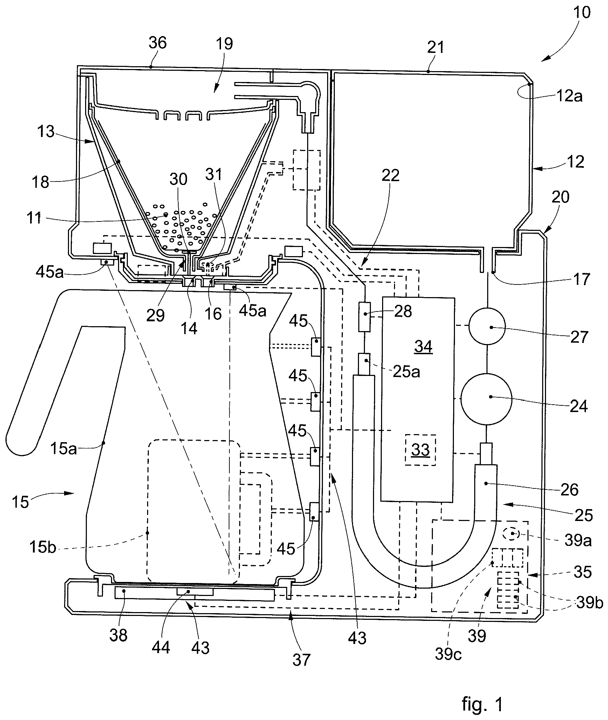

Embodiments described here with reference to fig. 1 concern a machine 10 for preparing and delivering a beverage, in particular an infused beverage, starting from a powdered, or ground, aromatic mixture 11, by infusing it, or mixing it, with water, or possibly also only hot water.

The machine 10 comprises a tank 12 for water, fluidically connected to a filtering container 13 suitable to contain the aromatic mixture 11 to be subjected to infusion.

For example, the aromatic mixture 11 can be a mixture of powder and/or with a desired granulometry, of leaves, or portions thereof, of coffee, tea, other vegetable substance, or other.

The machine 10, also, comprises an outlet for the beverage 14, cooperating with the filtering container 13, through which the infused beverage can be delivered toward a delivery zone and inside a receptacle 15 disposed in the latter.

According to some embodiments, the machine 10 comprises selective delivery devices 29 associated with the outlet for the beverage 14 and able to be selectively driven to open and close it in order to allow or prevent the outflow of the beverage from the filtering container 13, and therefore the delivery thereof into the receptacle 15 positioned in the delivery zone.

The tank 12 can generally be a container configured to contain a determinate quantity of water to prepare a beverage. The volume of the tank 12 can be, for example, at least equal to the volume of water necessary to fill a carafe.

The tank 12 can be provided with an introduction aperture 12a, associated with a lid 21, through which the water can be introduced into it, and an outlet aperture 17, from which the desired amount of water can be taken on each occasion.

According to some embodiments, the tank 12 can be positioned inside a housing 20 of the machine 10, or attached to it, possibly in a removable manner to be cleaned and/or to be filled.

According to one variant, the tank 12 can be associated with a continuous water feed source.

The tank 12 is connected to the filtering container 13 by means of a hydraulic circuit 22.

The hydraulic circuit 22 is connected on one side to the outlet aperture 17 of the tank 12 and on the opposite side to a diffusion head 19, disposed above the filtering container 13 and configured to diffuse the water coming from the tank 12 on to the aromatic mixture 11 so as to increase the contact between the water and the aromatic mixture 11 itself.

According to some embodiments, the filtering container 13 for the mixture can have a funnel shape, and a filtering element 18 can be inserted inside it suitable to retain the solids of the aromatic mixture 11, preventing them from being delivered together with the infused beverage.

According to some embodiments, access means 36 and/or movement means can be provided, configured to allow access to the filtering container 13 so that a desired quantity of aromatic mixture 11 can be introduced on each occasion, and/or removed together with the possible filtering element 18 at the end of the delivery of the prepared beverage.

The machine 10 also comprises a heating device 25, disposed along the hydraulic circuit 22, and configured to heat the water in transit through it.

By way of example, the heating device 25 can be a through-flow boiler comprising a transit channel 25a for the water and at least one heating element 26, for example a resistance, associated with the transit channel 25a and configured to heat the water inside it.

The machine 10, also, comprises a pump 24 configured to take from the tank 12 the quantity of water necessary to prepare the selected beverage and feed it along the hydraulic circuit 22 and toward the heating device 25.

According to some embodiments, the pump 24 has an adjustable flow rate, so as to be able to adjust the speed of the water that transits through the heating device and possibly through the aromatic mixture 11.

According to some embodiments, the machine 10 comprises a flow meter 27, or other means for detecting the flow disposed in the tank 12 and/or along the hydraulic circuit 22 to measure the quantity of water in transit through it.

According to some embodiments, the flow meter 27 is located upstream of the pump 24, allowing a faster and more effective detection of the flow rate and, therefore, a dynamic and real-time adjustment of the pump 24.

According to some embodiments, the machine 10, also, comprises temperature sensors 28, disposed along the hydraulic circuit 22 and configured to detect the temperature of the water in transit.

According to some embodiments, the temperature sensors 28 can be disposed downstream of the heating device 25, or positioned inside it, possibly in correspondence with the outlet end of the transit channel 25a.

According to some embodiments, the machine 10 comprises a control and command unit 34, configured to regulate its functioning as a function of the user's selection, to prepare the beverage selected on each occasion.

According to some embodiments, the machine 10 comprises a user interface 35, connected to the control and command unit 34, through which the user can select the type and/or the quantity of a beverage to be prepared.

According to some embodiments, the control and command unit 34 can comprise, or be connected to, a memory unit 33 in which information relating to the operating parameters for the preparation of each selectable beverage can be memorized.

According to some variants, the information can comprise the optimal values of temperature and/or speed of the water for each beverage that can be selected by the user, or for each combination defined by type of beverage, quantity, concentration, temperature, etc.

According to some embodiments, one or more of the filtering container 13, the pump 24, the heating device 25, the hydraulic circuit 12 and/or the control and command unit 34 and the memory unit 33 can be housed inside the housing 20.

According to some embodiments, the housing 20 can be conformed so as to define, in the delivery zone underneath the outlet for the beverage 14, 16, a support base 37 for the receptacle 15.

According to one aspect of the invention, the machine 10 comprises at least one recognition device 43 configured to recognize a receptacle 15 in the delivery zone.

According to possible variants, the recognition device 43 can be directly connected to the selective delivery devices 29 so as to regulate their functioning on the basis of the data collected.

According to some embodiments, the recognition device 43 can be configured to transmit a signal to the control and command unit 34, which can command at least one between the pump 24, the heating device 25 and the selective delivery devices 29 as a function of the signal(s) received.

For example, the control and command unit 34 can command the selective delivery devices 29 so as to allow the delivery of the beverage selected by the user only when the presence of a suitable receptacle 15 in the delivery zone has been recognized.

According to some embodiments, the recognition device 43 is configured to perform a detection at the time of the selection or the start of the beverage preparation cycle.

According to possible variants, the recognition device 43 is configured to carry out detections substantially continuously, at predefined intervals, also during the preparation cycle, in order to monitor whether the receptacle 15 positioned in the delivery zone is possibly removed and/or replaced with one that is not suitable.

The control and command unit 34 is configured to process the data received by the recognition device 43 to determine and/or estimate the size and therefore the capacity of the receptacle 15, and compare it with the quantity of beverage selected by the user to verify that the receptacle 15 is suitable.

The control and command unit 34, as a function of the outcome of the comparison, can generate a warning signal to indicate to the user that the receptacle 15 is not present, or is not suitable, possibly suspending the start of the preparation cycle of the beverage until a suitable receptacle 15 is positioned.

According to other embodiments, the control and command unit 34 can also be configured to start the preparation cycle, and possibly command the selective delivery devices 29 to prevent the delivery of the beverage until a correct receptacle 15 is positioned in the delivery zone.

According to the invention, it is also provided that the control and command unit 34, as a function of the size of the receptacle 15 determined, or estimated on the basis of the information received from the recognition device 43, activates the selective delivery devices 29 to allow the delivery of only a part of the total quantity of beverage requested, correlated to this size.

According to some embodiments, for example described with reference to fig. 1, the recognition device 43 comprises one or more weight sensors 44, for example one or more load cells, disposed in correspondence with a support base 37 for the receptacle 15.

The load cell(s) can be disposed below or above the support base 37, or possibly integrated in it.

According to some embodiments, the support base 37 can also be associated with temperature maintenance means 38, which can be activated for example when a quantity of beverage is selected that is higher than a determinate threshold value, for example one or half a carafe.

According to these solutions, the control and command unit 34 can be configured to start the beverage preparation cycle and/or activate the selective delivery devices 29 so as to allow the delivery of the beverage only when a value of weight greater than a determinate threshold value is detected.

According to some embodiments, the control and command unit 34 can be configured to compare the weight of the receptacle with one or more values memorized in the memory unit 33 to estimate the size of the receptacle 15 and compare it with the quantity of beverage selected by the user and consequently command the functioning of the components.

According to this embodiment, it can also be provided that the control and command unit 34 is configured to control the quantity of beverage delivered also as a function of the weight detected.

According to some embodiments, which can be combined with all the embodiments described here, the recognition device 43 comprises presence detection devices 45, which can be of the optical type, or possibly of the ultrasonic type, suitable to transmit and receive electromagnetic radiations or ultrasounds for a determinate extension in height in the delivery zone.

According to some embodiments, the extension in height can correspond substantially to the entire distance between the support base 37 and the outlet for the beverage 14, 16, or at least to a part of it, for example comprised between 50% and 90% from the support base 37 upward.

According to some embodiments, for example at least one presence detection sensor 45 of the optical type can be provided, suitable to transmit a light beam through the delivery zone, and possibly receive a light beam reflected by the receptacle 15 positioned in it, if present.

According to other variants, at least one presence detection sensor 45 of the ultrasonic type can be provided, suitable to transmit and receive electromagnetic radiations with ultrasonic frequencies.

The at least one presence detection device 45 can be disposed on the housing 20, for example on a wall thereof positioned in correspondence with the delivery zone and can be configured to transmit the electromagnetic radiation in a substantially horizontal direction.

According to possible variants, another presence detection device 45a can also be provided, for example an optical sensor, disposed on the housing 20, on the wall thereof where the outlet for the beverage 14 is positioned, and configured to transmit a radiation, or a light beam, in a vertical direction, or inclined with respect to it.

If the receptacle 15 is not present, the respective presence detection sensor 45, 45a will not receive any reflected light beam, and therefore the control and command unit 34 will detect the absence of the receptacle 15.

According to some embodiments, the recognition device 43 can comprise a single presence detection sensor 45 in the form of a bar which develops in a longitudinal direction, configured to emit and receive electromagnetic radiations along its height. In this case, the electromagnetic radiation emitted can have the shape of a flat band on a vertical plane, and the presence detection sensor 45 can be configured to determine, as a function of the portion of radiation received, or possibly of the portion not received, the height of the receptacle 15.

According to some embodiments, a plurality of presence detection sensors 45 can be provided, disposed at different heights from each other, each suitable to transmit and receive a respective electromagnetic radiation, such as a light beam, or ultrasounds. In this case the control and command unit 34 can be configured to process the data received from each of them to estimate the size of a receptacle 15 positioned in the delivery zone and consider this information to start or to not start the preparation cycle and/or the delivery of the beverage selected.

In this case it can be provided that the presence detection sensors 45 are all activated simultaneously, or are activated progressively from the lowest to the highest in order to define the height of the receptacle 15.

By way of example, fig. 1 shows two receptacles 15, that is a carafe 15a in a continuous line and a cup 15b in a dotted line. When the carafe 15a is positioned, all the presence detection sensors 45 receive a respective reflected radiation, for example a reflected light beam, while when a cup 15b is positioned only two presence detection sensors 45 receive a signal. Based on the number of signals received by the different presence detection sensors 45, therefore, the control and command unit 34 can determine a height of the receptacle 15 and possibly estimate its volume.

According to other embodiments, it can also be provided that the presence detection sensors 45 are aligned on two or more parallel rows in a vertical direction, so as to have both information on the height of the receptacle 15, and also information on the width thereof.

The information on height and width can be processed to determine an estimate of the volume of the receptacle 15 itself.

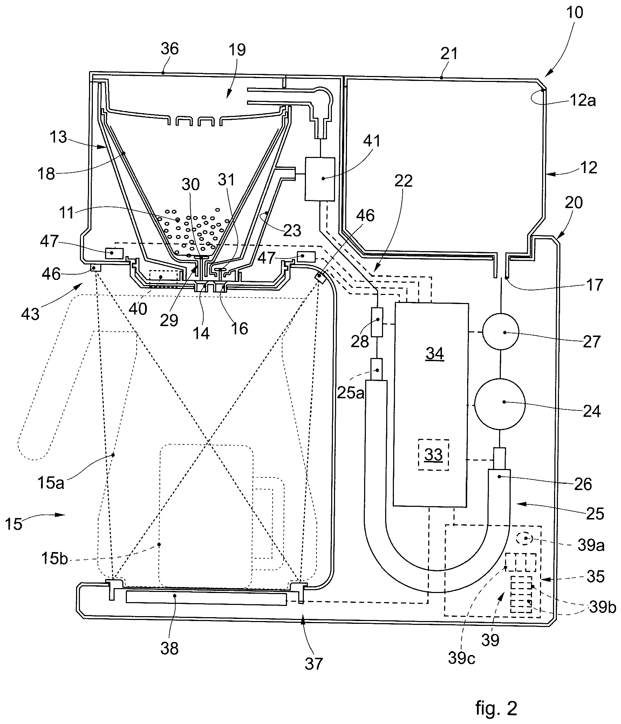

According to other embodiments, for example described with reference to fig. 2, the recognition device 43 can, also, comprise one or more acquisition devices 46 suitable to acquire an image of the delivery zone. The acquisition devices 46 can be, for example, cameras or video cameras.

According to these embodiments, the control and command unit 34 can be configured to receive the acquired image and process it to recognize the presence and type of receptacle 15 present in the delivery zone. The acquisition devices 46 can also be used to determine the quantity of beverage gradually delivered into the receptacle 15.

According to some embodiments, the control and command unit 34 can compare the image acquired by one or more acquisition devices 46 with a plurality of images, for example memorized in the memory unit 33, to estimate the size of the receptacle 15 recognized and determine whether it is suitable for the beverage selected by the user through the interface 35.

According to some embodiments, the user interface 35 can comprise suitable commands 39, for example push buttons, selection knobs, and/or a touch sensitive screen, by means of which the user can select the characteristics of the beverage to be prepared.

According to some embodiments the selection of a beverage comprises the selection of the type of beverage, and of one or more characteristics including quantity, concentration, temperature.

According to some embodiments, the user interface 35 can comprise commands for selecting the quantity 39a of beverage to be delivered, or the size of a receptacle 15 to be used, for example a carafe, half a carafe, a cup, a mug, a glass, or other.

Furthermore, the user interface 35 can comprise commands for selecting the concentration 39b of the infused beverage, for example light, normal, or strong, for selecting the temperature 39c, or other.

According to possible variants, for example described with reference to fig. 2, two outlets are provided, of which one for the beverage 14 and one for the hot water 16 only, the latter cooperating with a diversion channel 23 separated from the filtering container 13, and communicating with the hydraulic circuit 22.

According to another variant, one of the two outlets 14 or 16 could be used in cooperation with a special device, not shown, to deliver beverages through the use of specific capsules/pods containing aromatic mixtures 11, for example of coffee, tea, herbal infusions, etc.

According to possible embodiments, the first outlet 14 and the second outlet 16 are advantageously disposed close to each other, so as to allow the delivery of the infused beverage or of the hot water into the same delivery zone.

According to these embodiments, each outlet 14, 16 is associated with respective selective delivery devices 29.

For example the selective delivery devices 29 can comprise a first valve 30 associated with the outlet for the beverage 14 and a second valve 31 associated with the outlet for the hot water 16.

The closure of the valves 30, 31 allows, in particular, to be able to remove the receptacle 15 during the delivery of the beverage, without the risk of dripping.

According to other embodiments, described for example with reference to fig. 2, the machine 10 comprises a diversion element 41 disposed along the hydraulic circuit 22 and configured to selectively and alternately divert the flow of water toward the filtering container 13, or toward the diversion channel 23.

According to possible solutions, the diversion element 41 can comprise a three-way valve, of which two ways are associated with the hydraulic circuit 22 respectively as an inlet and as a first outlet, and one way is associated as a second outlet from the diversion channel 23.

According to some embodiments, the diversion element 41 can be driven by the control and command unit 34 as a function of the selection made by the user.

According to possible variants of embodiments, a selector device 40 can be provided which can be manually driven by the user and configured to act on the diversion element 41.

According to other embodiments, the selector device 40 can be connected to the selective delivery devices 29 associated with the first 14 and the second outlet 16 and directly, or indirectly, condition their functioning to allow or prevent the delivery of the beverage.

According to one variant, the selector device 40 can be integrated in the user interface 35.

According to other embodiments, the diversion element 41 adopts the first, or the second operating state, as a function of the position of the selector device 40.

According to other embodiments, the selector device 40 can be connected to the selective delivery devices 29 associated with the first 14 and the second outlet 16 and can directly, or indirectly, condition their functioning.

According to some embodiments, it can be provided that, as a function of the position of the selector device 40, the selective delivery devices 29 are activated so as to open one outlet 14, 16 and close the other 16, 14.

According to possible variants, the selector device 40 can adopt three different positions, providing a third position in which the selective delivery devices 29 close both the outlets 14, 16 with the respective valves 30, 31.

According to some solutions, the selector device 40 can be a mechanical device, such as for example a lever, a sliding bar, or a similar element, which can be moved manually by the user.

According to these embodiments, the selector device 40 can directly drive the selective delivery devices 29.

According to some variants, the selector device 40 can be an electric or electronic command, for example driven by means of an electric motor, a linear actuator, or a servomechanism, which can be activated by the user or according to a functioning program. In this case, the selector device 40 can indirectly drive the selective delivery devices 29.

According to other embodiments, position sensor means 47 can be provided, configured to detect the position of the selector device 40.

According to some embodiments, the position sensor means 47 can comprise one or more optical sensors, proximity sensors, or other similar or comparable elements, possibly cooperating with mating elements associated with the selector device 40.

According to some embodiments, the control and command unit 34 can be connected to the position sensor means 47 to receive an indication of the position of the selector device 40 and change the state of the latter based on the indication received

Embodiments described here concern a method for preparing a beverage which provides to:
- receive at entry in a control and command unit 34 a command relating to the organoleptic characteristics of a beverage to be prepared selected by a user through a user interface 35;
- receive at entry in the control and command unit 34 a command relating to the quantity of beverage to be prepared
- determine the operating parameters for a pump 24 and a heating device 25 to regulate the temperature and the flow rate of the water to be fed toward an outlet for the beverage 14, 16 as a function of the selected beverage;
- recognize whether a receptacle 15 suitable to receive the beverage is positioned in a delivery zone of the machine 10 by means of at least one recognition device 43;
- command the functioning of at least one between the pump 24, the heating device 25, and the selective delivery devices 29 associated with an outlet for the beverage 14, 16 as a function of the outcome of the recognition of the receptacle 15.

According to some embodiments, the method provides to continuously monitor, or with a high frequency, the delivery zone, so as to recognize by means of at least one recognition device 43 whether the receptacle 15 positioned in the delivery zone is removed.

According to other embodiments, the method provides to process the data received from the recognition device 43 to estimate a size and/or a capacity of the receptacle 15 and verify it is consistent with the quantity of beverage selected by the user.

As a function of the outcome of the verification, the method can provide to prevent the start of the beverage preparation cycle, possibly providing a warning signal to the user, or to prepare and/or deliver a smaller quantity of beverage, correlated to the estimated size of the recognized receptacle 15.

It is clear that modifications and/or additions of parts, or steps may be made to the machine 10 and to the method for preparing a beverage as described heretofore, without departing from the field of the present invention.

It is also clear that, although the present invention has been described with reference to some specific examples, a person of skill in the art shall certainly be able to achieve many other equivalent forms of machine 10 and method for preparing a beverage, having the characteristics as set forth in the claims and hence all coming within the field of protection defined thereby.

## Claims

1. Method for preparing a beverage in a machine for preparing beverages comprising a tank (12) fluidly connected to a filtering container (13) suitable to contain an aromatic mixture (11), and to an outlet for the beverage (14, 16) associated with selective delivery devices (29), wherein the method provides to:
- receive at entry, in a control and command unit (34), a signal relating to the organoleptic characteristics of a beverage to be prepared selected by a user through a user interface (35);
- receive at entry, in the control and command unit (34), a signal relating to the quantity of beverage to be prepared;
- determine the operating parameters for a pump (24) and a heating device (25) to regulate the water temperature and flow rate as a function of the selected beverage;
- recognize whether a receptacle (15) suitable to receive the beverage is positioned in a delivery zone of said machine by means of at least one recognition device (43) comprising one or more presence detection sensors (45) configured to emit and receive electromagnetic radiations or ultrasounds along a determinate extension in height in said delivery zone, and transmit a signal to said control and command unit (34);
- process the signals received from said recognition device (43) to estimate a size and a capacity of said receptacle (15) and verify if said estimated size and capacity are consistent with the quantity of beverage selected by the user;
- command the functioning of at least one between said pump (24), said heating device (25), and said selective delivery devices (29) associated with said outlet for the beverage (14, 16) as a function of the signal received from said recognition device (43) and of the selection made by said user
wherein as a function of the outcome of the verification, said method provides to prepare and/or deliver a smaller quantity of beverage, correlated to the estimated size and capacity of the recognized receptacle (15).

2. Method as in claim 1, **characterized in that** in order to recognize whether said receptacle (15) is suitable it provides to process the signals received from said recognition device (43) comparing them with data memorized in a memory unit (33).

3. Method as in claim 1 or 2, **characterized in that** it provides to transmit and receive respective electromagnetic waves in said delivery zone by means of presence detection sensors (45) disposed in two or more parallel rows in a vertical direction and process the information received to determine both a height and also a width of said receptacle (15) in order to estimate its volume.

4. Method as in one or more of claims from 1 to 3, **characterized in that,** when it is recognized that a receptacle (15) is not present, it provides to suspend the start of the beverage preparation cycle, until the receptacle (15) is positioned.

5. Method as in one or more of the claims from 1 to 4, **characterized in that,** it provides to continuously monitor, or with a high frequency, said delivery zone to recognize whether the receptacle (15) is moved away from the delivery zone during the delivery of the beverage and consequently command at least the selective delivery devices (29) to prevent the leakage of the beverage.

6. Machine for preparing beverages comprising at least one tank (12) for water fluidly connected to a filtering container (13) suitable to contain an aromatic mixture (11) and to an outlet for the beverage (14, 16) associated with selective delivery devices (29); a pump (24) to feed water from said tank (12); a heating device (25) to heat the water in transit, and a control and command unit (34) connected to a user interface (35), wherein said machine comprises at least one recognition device (43) configured to recognize the presence and the type of a receptacle (15) disposed in a delivery zone and to transmit a corresponding signal to said control and command unit (34), and comprising one or more presence detection sensors (45) configured to transmit and receive electromagnetic radiations or ultrasounds for a determinate extension in height in said delivery zone, wherein said control and command unit (34) is configured to regulate the functioning of at least one between said pump (24), said heating device (25), said selective delivery devices (29) as a function of the signal received from said recognition device (43) and the selection made by the user through said user interface (35), **characterised in that** said control and command unit (34) is configured to perform a method as in any claim 1 to 5.

7. Machine as in claim 6, **characterized in that** it comprises a housing (20) suitable to house said filtering container (13), said pump (24), and said heating device (25) and conformed so as to define a support base (37) for said receptacle (15) underneath said outlet for the beverage (14, 16) and said one or more optical sensor(s) (45) is/are disposed on a wall of said housing (20) facing toward said delivery zone.

8. Machine as in claim 6 or 7, **characterized in that** said recognition device (43) comprises a single presence detection sensor (45) in the form of a bar which develops in a longitudinal direction, configured to emit and receive electromagnetic radiations along its height in flat band form.

9. Machine as in claim 6 or 7, **characterized in that** said recognition device (43) comprises a plurality of presence detection sensors (45) disposed at different heights in said delivery zone, each suitable to emit and receive a respective electromagnetic radiation.

10. Machine as in any claim hereinbefore from 6 to 9, **characterized in that** said recognition device (43) comprises at least one presence detection sensor (45a), disposed on a wall of said housing (20) in which the outlet for the beverage (14, 16) is positioned, and configured to transmit an electromagnetic radiation in a vertical, or inclined, direction.

11. Machine as in any claim hereinbefore from 6 to 10, **characterized in that** it comprises two or more presence detection sensors (45) aligned on respective parallel rows in a vertical direction.

12. Machine as in any claim hereinbefore from 6 to 11, **characterized in that** said recognition device (43) comprises at least one weight sensor (44) disposed in correspondence with a support base (37) for a receptacle (15) provided in said delivery zone.

13. Machine as in any claim hereinbefore from 6 to 12, **characterized in that** said recognition device (43) of the optical type comprises at least one acquisition device (46) of the optical type configured to acquire an image of the delivery zone.

14. Machine as in any claim hereinbefore from 6 to 13, **characterized in that** said control and command unit (34) is configured to process the signals received from said recognition device (43) and compare them with data memorized in a memory unit (33) to determine and/or estimate a size or capacity of a receptacle (15) positioned in said acquisition zone, and determine whether said receptacle (15) is or is not suitable for the delivery cycle selected based on the determined and/or estimated size or capacity and on the quantity selected by the user.

## Patentansprüche

1. Verfahren zur Zubereitung eines Getränks in einer Maschine zur Zubereitung von Getränken, die einen Tank (12) umfasst, der mit einem Filterbehälter (13), der eine aromatische Mischung (11) enthalten kann, und mit einem Auslass für das Getränk (14, 16), der mit selektiven Abgabevorrichtungen (29) verbunden ist, in Fluidverbindung steht, wobei das Verfahren folgendes vorsieht:
- Empfangen am Eingang, in einer Steuer- und Befehlseinheit (34), eines Signals, das sich auf die organoleptischen Eigenschaften eines zuzubereitenden Getränks bezieht, das von einem Benutzer über eine Benutzerschnittstelle (35) ausgewählt wurde;
- Empfangen am Eingang, in der Steuer- und Befehlseinheit (34), eines Signals, das sich auf die Menge des zuzubereitenden Getränks bezieht;
- Bestimmen der Betriebsparameter für eine Pumpe (24) und eine Heizvorrichtung (25), um die Wassertemperatur und die Durchflussmenge in Abhängigkeit von dem ausgewählten Getränk zu regulieren;
- Erkennen, ob ein zur Aufnahme des Getränks geeignetes Gefäß (15) in einer Abgabezone der Maschine positioniert ist, mittels mindestens einer Erkennungsvorrichtung (43), die einen oder mehrere Anwesenheitserfassungssensoren (45) umfasst, die so konfiguriert sind, dass sie elektromagnetische Strahlungen oder Ultraschall entlang einer bestimmten Höhenausdehnung in der Abgabezone aussenden und empfangen, und ein Signal an die Steuer- und Befehlseinheit (34) senden;
- Verarbeiten der von der Erkennungsvorrichtung (43) empfangenen Signale, um die Größe und das Fassungsvermögen des Gefäßes (15) einzuschätzen und zu verifizieren, wenn die geschätzte Größe und das geschätzte Fassungsvermögen mit der Menge des vom Benutzer ausgewählten Getränks übereinstimmen;
- Steuern der Funktionsweise der Pumpe (24), der Heizvorrichtung (25) und/oder der selektiven Abgabevorrichtungen (29), die mit dem Auslass für das Getränk (14, 16) verbunden sind, in Abhängigkeit von dem von der Erkennungsvorrichtung (43) empfangenen Signal und der vom Benutzer getroffenen Auswahl,
wobei in Abhängigkeit vom Ergebnis der Verifizierung das Verfahren vorsieht, in Korrelation zu der geschätzten Größe und des Fassungsvermögens des erkannten Gefä-ßes (15), eine kleinere Menge an Getränk zuzubereiten und/oder abzugeben.

2. Verfahren nach Anspruch 1, **dadurch gekennzeichnet, dass** es zur Erkennung, ob das Gefäß (15) geeignet ist, vorsieht, die von der Erkennungsvorrichtung (43) empfangenen Signale zu verarbeiten, indem sie mit in einer Speichereinheit (33) gespeicherten Daten verglichen werden.

3. Verfahren nach Anspruch 1 oder 2, **dadurch gekennzeichnet, dass** es vorsieht, in der Abgabezone mittels Anwesenheitserkennungssensoren (45), die in zwei oder mehr parallelen Reihen in vertikaler Richtung angeordnet sind, jeweilige elektromagnetische Wellen zu senden und zu empfangen, und die empfangenen Informationen zu verarbeiten, um sowohl die Höhe als auch die Breite des Gefäßes (15) zu bestimmen, um dessen Volumen einzuschätzen.

4. Verfahren nach einem oder mehreren der Ansprüche 1 bis 3, **dadurch gekennzeichnet, dass** es, wenn erkannt wird, dass ein Gefäß (15) nicht vorhanden ist, vorsieht, den Start des Getränkezubereitungszyklus zu unterbrechen, bis das Gefäß (15) positioniert ist.

5. Verfahren nach einem oder mehreren der Ansprüche 1 bis 4, **dadurch gekennzeichnet, dass** es vorsieht, die Abgabezone kontinuierlich oder mit hoher Frequenz zu überwachen, um zu erkennen, ob das Gefäß (15) während der Abgabe des Getränks von der Abgabezone wegbewegt wird, und in der Folge zumindest die selektiven Abgabevorrichtungen (29) zu steuern, um das Auslaufen des Getränks zu verhindern.

6. Maschine zur Zubereitung von Getränken, umfassend mindestens einen Wassertank (12), der mit einem Filterbehälter (13), der eine aromatische Mischung (11) enthalten kann, und mit einem Auslass für das Getränk (14, 16), der mit selektiven Abgabevorrichtungen (29) verbunden ist, in Fuidverbindung steht; eine Pumpe (24), um Wasser aus dem Tank (12) zuzuführen; eine Heizvorrichtung (25) zum Erwärmen des durchlaufenden Wassers, und eine Steuer- und Befehlseinheit (34), die mit einer Benutzerschnittstelle (35) verbunden ist, wobei die Maschine mindestens eine Erkennungsvorrichtung (43) umfasst, die so konfiguriert ist, dass sie das Vorhandensein und den Typ eines in einer Abgabezone angeordneten Gefäßes (15) erkennt und ein entsprechendes Signal an die Steuer- und Befehlseinheit (34) sendet, und einen oder mehrere Anwesenheitserkennungssensoren (45) umfasst, die so konfiguriert sind, dass sie elektromagnetische Strahlungen oder Ultraschall für eine bestimmte Höhenausdehnung in der Abgabezone senden und empfangen, wobei die Steuer- und Befehlseinheit (34) so konfiguriert ist, dass sie den Betrieb der Pumpen (24), der Heizvorrichtung (25) und/oder der selektiven Abgabevorrichtungen (29) in Abhängigkeit von dem von der Erkennungsvorrichtung (43) empfangenen Signal und der vom Benutzer über die Benutzerschnittstelle (35) getroffenen Auswahl reguliert, **dadurch gekennzeichnet, dass** die Steuer- und Befehlseinheit (34) so konfiguriert ist, dass sie ein Verfahren gemäß irgendeinem der Ansprüche 1 bis 5 durchführt.

7. Maschine nach Anspruch 6, **dadurch gekennzeichnet, dass** sie ein Gehäuse (20) umfasst, das geeignet ist, den Filterbehälter (13), die Pumpe (24) und die Heizvorrichtung (25) aufzunehmen, und das so angepasst ist, dass es eine Trägerbasis (37) für das Gefäß (15) unterhalb des Auslasses für das Getränk (14, 16) definiert, und dass ein oder mehrere optische(r) Sensor(en) (45) an einer Wand des Gehäuses (20) dem Abgabebereich zugewandt angeordnet ist/sind.

8. Maschine nach Anspruch 6 oder 7, **dadurch gekennzeichnet, dass** die Erkennungsvorrichtung (43) einen einzigen Anwesenheitserkennungssensor (45) in Form einer sich in Längsrichtung erstreckenden Leiste umfasst, die so konfiguriert ist, dass sie elektromagnetische Strahlungen entlang ihrer Höhe in Flachbandform aussendet und empfängt.

9. Maschine nach Anspruch 6 oder 7, **dadurch gekennzeichnet, dass** die Erkennungsvorrichtung (43) eine Vielzahl von Anwesenheitserkennungssensoren (45) umfasst, die auf unterschiedlichen Höhen in der Abgabezone angeordnet sind und jeweils geeignet sind, eine entsprechende elektromagnetische Strahlung auszusenden und zu empfangen.

10. Maschine nach irgendeinem der vorhergehenden Ansprüche 6 bis 9, **dadurch gekennzeichnet, dass** die Erkennungsvorrichtung (43) mindestens einen Anwesenheitserkennungssensor (45a) umfasst, der an einer Wand des Gehäuses (20), in der der Auslass für das Getränk (14, 16) positioniert ist, angeordnet ist und so konfiguriert ist, dass er eine elektromagnetische Strahlung in einer vertikalen oder geneigten Richtung aussendet.

11. Maschine nach irgendeinem der vorhergehenden Ansprüche 6 bis 10, **dadurch gekennzeichnet, dass** sie zwei oder mehr Anwesenheitsdetektionssensoren (45) umfasst, die in jeweiligen parallelen Reihen in einer vertikalen Richtung ausgerichtet sind.

12. Maschine nach irgendeinem der vorhergehenden Ansprüche 6 bis 11, **dadurch gekennzeichnet, dass** die Erkennungsvorrichtung (43) mindestens einen Gewichtssensor (44) umfasst, der in Übereinstimmung mit einer Trägerbasis (37) für ein in der Abgabezone bereitgestelltes Gefäß (15) angeordnet ist.

13. Maschine nach irgendeinem der vorhergehenden Ansprüche 6 bis 12, **dadurch gekennzeichnet, dass** die Erkennungsvorrichtung (43) des optischen Typs mindestens eine Erfassungsvorrichtung (46) des optischen Typs umfasst, die so konfiguriert ist, dass sie ein Bild der Abgabezone erfasst.

14. Maschine nach irgendeinem der vorhergehenden Ansprüche 6 bis 13, **dadurch gekennzeichnet, dass** die Steuer- und Befehlseinheit (34) so konfiguriert ist, dass sie die von der Erkennungsvorrichtung (43) empfangenen Signale verarbeitet und sie mit in einer Speichereinheit (33) gespeicherten Daten vergleicht, um die Größe oder das Fassungsvermögen eines in der Erfassungszone positionierten Gefäßes (15) zu bestimmen und/oder einzuschätzen, und auf der Grundlage der bestimmten und/oder geschätzten Größe oder des Fassungsvermögens und der vom Benutzer gewählten Menge zu bestimmen, ob das Gefäß (15) für den gewählten Abgabezyklus geeignet ist oder nicht.

## Revendications

1. Procédé de préparation d'une boisson dans une machine de préparation de boissons comprenant un réservoir (12) relié de manière fluidique à un récipient de filtration (13) approprié pour contenir un mélange aromatique (11), et avec une sortie pour la boisson (14, 16) associée à des dispositifs de distribution sélective (29), dans lequel le procédé comprend les étapes consistant à :
- recevoir au niveau de l'entrée, dans une unité de contrôle et de commande (34), un signal relatif aux caractéristiques organoleptiques d'une boisson à préparer sélectionnée par un utilisateur via une interface utilisateur (35) ;
- recevoir au niveau de l'entrée, dans l'unité de contrôle et de commande (34), un signal relatif à la quantité de boisson à préparer ;
- déterminer les paramètres de fonctionnement d'une pompe (24) et d'un dispositif de chauffage (25) pour réguler la température et le débit d'écoulement de l'eau en fonction de la boisson sélectionnée ;
- reconnaître si un réceptacle (15) approprié pour recevoir la boisson est positionné dans une zone de distribution de ladite machine au moyen d'au moins un dispositif de reconnaissance (43) comprenant un ou plusieurs capteurs de détection de présence (45) configurés pour émettre et recevoir des rayonnements électromagnétiques ou des ultrasons le long d'une extension déterminée en hauteur dans ladite zone de distribution, et transmettre un signal à ladite unité de contrôle et de commande (34) ;
- traiter les signaux reçus à partir dudit dispositif de reconnaissance (43) pour estimer une taille et une capacité dudit réceptacle (15) et vérifier si ladite taille et ladite capacité estimées sont compatibles avec la quantité de boisson sélectionnée par l'utilisateur ;
- commander le fonctionnement d'au moins un entre ladite pompe (24), ledit dispositif de chauffage (25) et lesdits dispositifs de distribution sélective (29) associés à ladite sortie pour la boisson (14, 16) en fonction du signal reçu en provenance dudit dispositif de reconnaissance (43) et de la sélection effectuée par ledit utilisateur ;
dans lequel en fonction du résultat de la vérification, ledit procédé prévoit de préparer et/ou de distribuer une plus petite quantité de boisson, en corrélation avec la taille et la capacité estimées du réceptacle reconnu (15).

2. Procédé selon la revendication 1, **caractérisé en ce que** pour reconnaître si ledit réceptacle (15) est approprié, il prévoit de traiter les signaux reçus en provenance dudit dispositif de reconnaissance (43) en les comparant avec des données mémorisées dans une unité de mémoire (33).

3. Procédé selon la revendication 1 ou 2, **caractérisé en ce qu'**il prévoit d'émettre et de recevoir des ondes électromagnétiques respectives dans ladite zone de distribution au moyen de capteurs de détection de présence (45) disposés en deux rangées parallèles ou plus dans une direction verticale et de traiter les informations reçues pour déterminer à la fois une hauteur et également une largeur dudit réceptacle (15) afin d'estimer son volume.

4. Procédé selon l'une ou plusieurs des revendications 1 à 3, **caractérisé en ce que** lorsqu'il est reconnu qu'un réceptacle (15) n'est pas présent, il prévoit de suspendre le début du cycle de préparation de boisson, jusqu'à ce que le réceptacle (15) soit positionné.

5. Procédé selon une ou plusieurs des revendications 1 à 4, **caractérisé en ce qu'**il prévoit de surveiller en continu, ou avec une fréquence élevée, ladite zone de distribution pour reconnaître si le réceptacle (15) est éloigné de la zone de distribution pendant la distribution de la boisson et par conséquent commander au moins les dispositifs de distribution sélective (29) pour empêcher la fuite de la boisson.

6. Machine pour préparer des boissons comprenant au moins un réservoir (12) pour de l'eau relié de manière fluidique à un récipient de filtration (13) approprié pour contenir un mélange aromatique (11) et à une sortie pour la boisson (14, 16) associée à des dispositifs de distribution sélective (29) ; une pompe (24) pour alimenter de l'eau en provenance dudit réservoir (12) ; un dispositif de chauffage (25) pour chauffer l'eau en transit, et une unité de contrôle et de commande (34) connectée à une interface utilisateur (35), dans laquelle ladite machine comprend au moins un dispositif de reconnaissance (43) configuré pour reconnaître la présence et le type d'un réceptacle (15) disposé dans une zone de distribution et pour transmettre un signal correspondant à ladite unité de contrôle et de commande (34), et comprenant un ou plusieurs capteurs de détection de présence (45) configurés pour transmettre et recevoir des rayonnements électromagnétiques ou des ultrasons pour une extension déterminée en hauteur dans ladite zone de distribution, dans lequel ladite unité de contrôle et de commande (34) est configurée pour réguler le fonctionnement d'au moins un entre ladite pompe (24), ledit dispositif de chauffage (25), lesdits dispositifs de distribution sélective (29) en fonction du signal reçu en provenance dudit dispositif de reconnaissance (43) et de la sélection effectuée par l'utilisateur via ladite interface utilisateur (35), **caractérisé en ce que** ladite unité de contrôle et de commande (34) est configurée pour mettre en oeuvre un procédé selon l'une quelconque des revendications 1 à 5.

7. Machine selon la revendication 6, **caractérisée en ce qu'**elle comprend un logement (20) approprié pour loger ledit récipient de filtration (13), ladite pompe (24) et ledit dispositif de chauffage (25) et conformé de manière à définir une base de support (37) pour ledit réceptacle (15) en dessous de ladite sortie pour la boisson (14, 16) et ledit ou lesdits capteurs optiques (45) est/sont disposé (s) sur une paroi dudit logement (20) faisant face à ladite zone de distribution.

8. Machine selon la revendication 6 ou 7, **caractérisée en ce que** ledit dispositif de reconnaissance (43) comprend un capteur de détection de présence unique (45) sous la forme d'une barre qui se développe dans une direction longitudinale, configurée pour émettre et recevoir des rayonnements électromagnétiques le long de sa hauteur sous forme de bande plate.

9. Machine selon la revendication 6 ou 7, **caractérisée en ce que** ledit dispositif de reconnaissance (43) comprend une pluralité de capteurs de détection de présence (45) disposés à des hauteurs différentes dans ladite zone de distribution, chacun étant approprié pour émettre et recevoir un rayonnement électromagnétique respectif

10. Machine selon l'une quelconque des revendications précédentes 6 à 9, **caractérisée en ce que** ledit dispositif de reconnaissance (43) comprend au moins un capteur de détection de présence (45a), disposé sur une paroi dudit logement (20) dans laquelle la sortie pour la boisson (14, 16) est positionnée, et configuré pour transmettre un rayonnement électromagnétique dans une direction verticale ou inclinée.

11. Machine selon l'une quelconque des revendications précédentes 6 à 10, **caractérisée en ce qu'**elle comprend deux ou plusieurs capteurs de détection de présence (45) alignés sur des rangées parallèles respectives dans une direction verticale.

12. Machine selon l'une quelconque des revendications précédentes 6 à 11, **caractérisée en ce que** ledit dispositif de reconnaissance (43) comprend au moins un capteur de poids (44) disposé en correspondance avec une base de support (37) pour un réceptacle (15) prévu dans ladite zone de distribution.

13. Machine selon l'une quelconque des revendications précédentes 6 à 12, **caractérisée en ce que** ledit dispositif de reconnaissance (43) du type optique comprend au moins un dispositif d'acquisition (46) du type optique configuré pour acquérir une image de la zone de distribution.

14. Machine selon l'une quelconque des revendications précédentes 6 à 13, **caractérisée en ce que** ladite unité de contrôle et de commande (34) est configurée pour traiter les signaux reçus en provenance dudit dispositif de reconnaissance (43) et les comparer avec des données mémorisées dans une unité de mémoire (33) pour déterminer et/ou estimer une taille ou une capacité d'un réceptacle (15) positionné dans ladite zone d'acquisition, et déterminer si ledit réceptacle (15) est ou non adapté au cycle de distribution sélectionné sur la base de la taille ou de la capacité déterminée et/ou estimée et de la quantité sélectionnée par l'utilisateur.
